(19) **Europäisches Patentamt / European Patent Office / Office européen des brevets**

(11) **EP 2 730 630 A1**

(12) # EUROPEAN PATENT APPLICATION
published in accordance with Art. 153(4) EPC

(43) Date of publication:
**14.05.2014 Bulletin 2014/20**

(21) Application number: **12807553.8**

(22) Date of filing: **29.05.2012**

(51) Int Cl.:
**C09J 133/06** (2006.01)   **C09J 7/00** (2006.01)
**C09J 11/06** (2006.01)

(86) International application number:
**PCT/JP2012/063780**

(87) International publication number:
**WO 2013/005506 (10.01.2013 Gazette 2013/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **07.07.2011   JP 2011150508**
              **10.02.2012   JP 2012027558**

(71) Applicant: **Nitto Denko Corporation**
**Ibaraki-shi**
**Osaka 567-8680 (JP)**

(72) Inventors:
• **KITANO, Chie**
  **Ibaraki-shi**
  **Osaka 567-8680 (JP)**
• **OKADA, Mika**
  **Ibaraki-shi**
  **Osaka 567-8680 (JP)**

(74) Representative: **Grünecker, Kinkeldey, Stockmair & Schwanhäusser**
**Leopoldstrasse 4**
**80802 München (DE)**

(54) **AQUEOUS-DISPERSION TYPE PRESSURE-SENSITIVE ADHESIVE COMPOSITION, PRESSURE-SENSITIVE ADHESIVE AND PRESSURE -SENSITIVE ADHESIVE SHEET**

(57)    This invention provides a water-dispersed PSA capable of ensuring adhesion to plastic film without a need for primer coating while not impairing the properties such as adhesive strength, heat resistance, etc. The water-dispersed PSA composition according to this invention comprises: an acrylic polymer (A) obtainable by polymerizing a monomer composition (A) comprising an alkyl (meth)acrylate as a primary component and a reactive functional group-containing monomer, an acrylic polymer (B) obtainable by polymerizing a monomer composition (B) comprising an alkyl (meth)acrylate as a primary component and a reactive functional group-containing monomer, the polymer (B) having a higher glass transition temperature than the polymer (A), and a crosslinking agent (C) reactive with the reactive functional group. In a DSC measurement of a PSA obtainable by drying the water-dispersed PSA composition, glass transition temperature peaks are detected at -25 °C or below, and between +30 °C to +190 °C, respectively.

[Fig. 1]

EP 2 730 630 A1

## Description

[Technical Field]

The present invention relates to a water-dispersed pressure-sensitive adhesive (PSA) composition used for PSA, etc., as well as a PSA and a PSA sheet that use the composition. The present application claims priority to Japanese Patent Application No. 2011-150508 filed on July 7th, 2011 and Japanese Patent Application No. 2012-027558 filed on February 10th, 2012, and the entire contents of these applications are incorporated herein by reference.

[Background Art]

Lately, from the standpoint of environmental stresses, there have been desires for reducing organic solvent use. Similarly, with respect to PSA compositions laminated on PSA sheets, attempts have been taken to replace solvent-based PSA compositions using organic solvents as the solvents with water-dispersed PSA compositions using water as the dispersion media.
When used on a substrate made of plastic film such as polyethylene terephthalate (PET), stretched polypropylene (OPP), etc., PSA coatings using water-dispersed PSA compositions are likely to provide insufficient adhesion between the substrate and the resulting PSA layers. As a result, so-called "transferring" occurs, such that after adhered to an adherend, when the PSA layer and the substrate are to be removed from the adherend, peeling occurs at the interface between the substrate and the PSA layer. Once transferring occurs, for restoring the adherend surface to the clean state it was before adhesion, it takes time and efforts to remove the PSA layer remaining on the adherend surface, causing a substantial reduction in the work efficiency.
To improve this limitation, in a method that has been suggested, a plastic substrate is subjected to primer coating treatment followed by PSA coating thereon (e.g. see Patent Document 1).

[Citation List]

[Patent Literature]

[Patent Literature 1] Japanese Patent Application Publication No. 2006-282733

[Summary of Invention]

[Technical Problem]

With the PSA coating according to Patent Document1, however, it is necessary to further coat with a water-dispersed PSA composition after forming of a primer coating layer to give rise to a problem of increased number of processes.
An objective of the present invention is to provide a water-dispersed PSA that can ensure adhesion to plastic film without a need for primer coating treatment while not impairing the properties such as adhesive strength, heat resistance, etc.

[Solution to Problem]

The present inventors have earnestly researched for a solution to the problem. As a result, it has been discovered that when a water-dispersed PSA composition comprises an acrylic polymer and another acrylic polymer having a higher glass transition temperature than the first, and a crosslinking agent, the resulting water-dispersed PSA is able to ensure adhesion to plastic film without a need for primer coating treatment while not impairing the properties such as adhesive strength, heat resistance and so on, whereby the present invention has been completed.
In particular, the water-dispersed PSA composition according to the present invention comprises an acrylic polymer (A) obtainable by polymerizing a monomer composition (A) comprising an alkyl (nneth)acrylate as a primary component and further comprising a reactive functional group-containing monomer, an acrylic polymer (B) obtainable by polymerizing a monomer composition (B) comprising an alkyl (meth)acrylate as a primary component and further comprising a reactive functional group-containing monomer with the acrylic polymer (B) having a higher glass transition temperature than the acrylic polymer (A), and a crosslinking agent (C) that is reactive with the reactive functional groups; with the water-dispersed PSA composition being characterized by glass transition temperature peaks detected at -25 °C or below as well as between +30 °C to +190 °C, respectively, in a DSC (differential scanning calorimeter) measurement made on a PSA obtainable by drying the water-dispersed PSA composition.

The water-dispersed PSA composition according to the present invention preferably comprises the acrylic polymer (A) and the acrylic polymer (B) at a solid weight ratio (acrylic polymer (A)/acrylic polymer (B)) of 99/1 to 60/40.

The water-dispersed PSA composition according to the present invention preferably comprises the crosslinking agent (C) in a range of 0.0007 to 10 parts by weight relative to 100 parts by weight of the acrylic polymer (A) and the acrylic polymer (B) combined.

In the water-dispersed PSA composition according to the present invention, the acrylic polymer (A) preferably comprises 70 % by weight or less of an ethyl acetate-insoluble portion.

In the water-dispersed PSA composition according to the present invention, the acrylic polymer (B) preferably has an SP value of 18 $(MPa)^{1/2}$ to 24 $(MPa)^{1/2}$.

In the water-dispersed PSA composition according to the present invention, the acrylic polymer (B) preferably has a weight average molecular weight of 2000 to 5000000.

In the water-dispersed PSA composition according to the present invention, the PSA obtainable by drying the water-dispersed PSA composition preferably comprises 30 to 85 % by weight of an ethyl acetate-insoluble portion.

The PSA according to the present invention is characterized by being formed with a water-dispersed PSA composition according to the present invention described above.

The PSA sheet according to the present invention is characterized by comprising a PSA layer formed from the PSA.

[Advantageous Effects of Invention]

The water-dispersed PSA composition according to the present invention can provide a PSA sheet capable of ensuring adhesion to plastic film without a need for primer coating treatment while not impairing properties such as adhesive strength, heat resistance and so on.

[Brief Description of Drawings]

Fig. 1 shows a cross-sectional diagram schematically illustrating a general constitution of a PSA sheet according to an embodiment of the present invention.

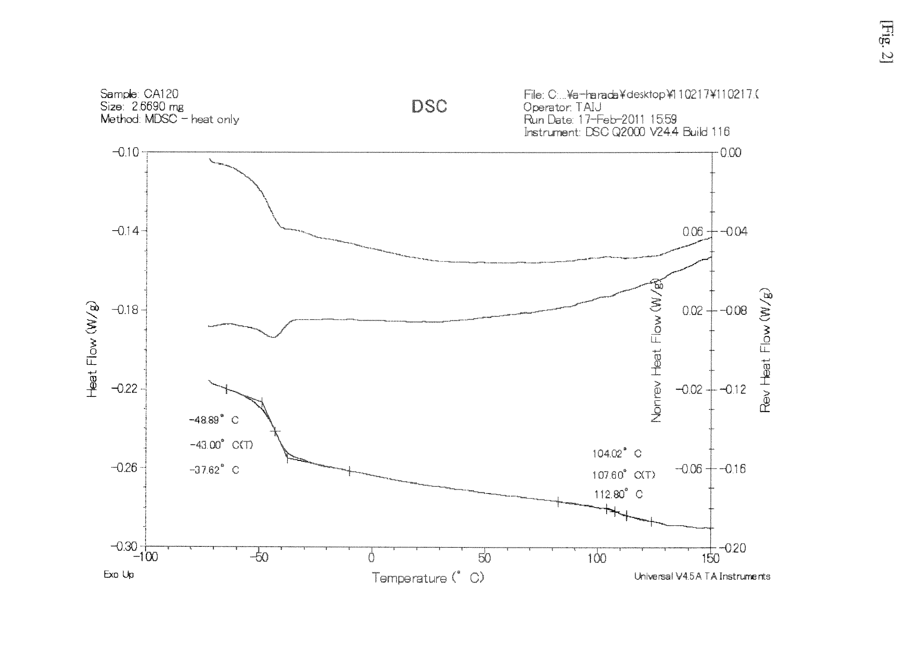

Fig. 2 shows a graph of DSC measurement results of a PSA prepared from a water-dispersed PSA composition obtained in Example 5.

[Description of Embodiments]

The present invention is described in detail below.

It is noted that "A to B" indicating a range means "A or greater, but B or smaller" and various physical properties given in the present description refer to values measured by the methods described in Examples described later unless otherwise noted In the present description, "(meth)acryl" in "(meth)acrylic acid" and the like term means "acryl and/or methacryl". The term "water-dispersed" in the present description refers to a state where components are at least partially dispersed in water; and for instance, the term "water-dispersed PSA composition" refers to a composition comprising a PSA composition and water and being in a state where the PSA composition is partially dispersed in water. It is noted that the term "dispersed" refers to a state where at least part of components are not dissolved in water, including also a suspended state and an emulsified state.

The "primary component" in the present description refers to a component that accounts for the highest content by weight of a given composition, usually meaning that it accounts for 50 % by weight or higher.

(I) Water-dispersed PSA composition

The water-dispersed PSA composition according to the present invention comprises an acrylic polymer (A) obtainable by polymerizing a monomer composition (A) comprising an alkyl (meth)acrylate as a primary component and further comprising a reactive functional group-containing monomer, an acrylic polymer (B) obtainable by polymerizing a monomer composition (B) comprising an alkyl (meth)acrylate as a primary component and further comprising a reactive functional group-containing monomer with the acrylic polymer (B) having a higher glass transition temperature than the acrylic polymer (A), and a crosslinking agent (C) that is reactive with the reactive functional groups.

In a DSC (differential scanning calorimeter) measurement made on a PSA obtainable by drying the water-dispersed PSA composition, glass transition temperature peaks are detected at -25 °C or below as well as between +30 °C to + 190 °C, respectively.

By this constitution, a PSA sheet can be obtained with an ability to ensure adhesion to plastic film without a need for primer coating treatment while not impairing properties such as adhesive strength, heat resistance and so on.

The glass transition temperature peaks detected by the DSC measurement made on the PSA obtainable by drying the water-dispersed PSA composition according to the present invention are preferably at -70 °C to -25 °C and at 30 °C to 190 °C, more preferably at -50 °C to -25 °C and at 35 °C to 185 °C, or even more preferably at -45 °C to -25 °C and at 40 °C to 180 °C. With the glass transition temperature peaks detected by the DSC measurement on the PSA layer being within these ranges, the adhesiveness to plastic film can be increased.

A person of ordinary skill in the art can adjust the glass transition temperature peaks detected by the DSC measurement on the PSA layer, for instance, by setting the compositions of the acrylic polymer (A) and the acrylic polymer (B) in the ranges described later.

The PSA obtainable by drying the water-dispersed PSA composition according to the present invention has a gel fraction (an ethyl acetate-insoluble portion) of preferably 30 to 85 % by weight or more preferably 35 to 80 % by weight. When the gel fraction of the PSA obtainable by drying the PSA composition is within these ranges, the resulting PSA exhibits sufficient adhesive strength. The gel fraction is measured by a method described later in Examples.

(i) Acrylic polymer (A)

The acrylic polymer (A) can be obtained by polymerizing a monomer composition (A) comprising an alkyl (meth)acrylate as a primary component and a reactive functional group-containing monomer.

The alkyl (meth)acrylate is not particularly limited. Examples thereof include compounds represented by the following general formula (1).

[Chem 1]

$$H_2C=CR^1COOR^2 \qquad (1)$$

(in general formula (1), $R^1$ is a hydrogen atom or a methyl group and $R^2$ is a linear or branched alkyl group having 1 to 18 carbon atoms.)

Specific examples of $R^2$ in general formula (1) include methyl group, ethyl group, propyl group, isopropyl group, butyl group, isobutyl group, sec-butyl group, t-butyl group, pentyl group, neopentyl group, isoamyl group, hexyl group, heptyl group, octyl group, 2-ethylhexyl group, isooctyl group, nonyl group, isononyl group, decyl group, isodecyl group, undecyl group, dodecyl group, tridecyl group, tetradecyl group, pentadecyl group, hexadecyl group, heptadecyl group, octadecyl group, and so on.

Specific examples of the alkyl (meth)acrylate represented by general formula (1) include methyl (meth)acrylate, ethyl (meth)acrylate, propyl (meth)acrytate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isoamyl (meth)acrylate, hexyl (meth)acrylate, heptyl (methacrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, and so on. These alkyl (meth)acrylates can be used singly or in combination of two or more kinds.

The number of carbon atoms in the alkyl group of the alkyl (meth)acrylate is preferably 2 to 18, or more preferably 4 to 12.

The amount of the aforementioned alkyl (meth)acrylate added can be, for example, 60 to 99.9 parts by weight, or preferably 70 to 99 parts by weight relative to 100 parts by weight of a total amount of the monomer composition (A).

The monomer composition (A) comprises, besides the aforementioned alkyl (meth)acrylate, a reactive functional group-containing monomer that has a reactive functional group in its molecule.

The reactive functional group means a functional group that can react with the crosslinking agent (C) and form a covalent bond and/or a coordinate bond with the crosslinking agent (C). Specific examples of the reactive functional group include carboxyl group, hydroxyl group, epoxy group, amino group, amide group, maleimide group, itaconimide group, succinimide group, sulfonate group, phosphate acid group, isocyanate group, alkoxyl group, alkoxysilyl group and so on. Among such reactive functional groups, it may contain only one species, or two or more species. Among the reactive functional groups, carboxyl group, hydroxyl group, amino group and epoxy group are preferable.

Specific examples of the resctive functional group-containing monomer include unsaturated carboxylic acids such as (meth)acrylic acid, itaconic acid, maleic acid, fumaric acid, crotonic acid, cinammic acid, etc.; monoesters of unsaturated dicarboxylic acids such as monomethyl itaconate, monobutyl itaconate, 2-acryloyloxyethyl phthalate, etc.; monoesters of unsaturated tricarboxylic acids such as 2-methacryloyloxyethyl trimellitate, etc.; monoesters of unsaturated tetracarboxylic acids such as 2-methacryloyloxyethyl pyromellitate, etc.; carboxyalkyl acrylates such as carboxyethyl acrylates (β-carboxyethyl acrylate, etc.), carboxypentyl acrylates, etc.; acrylic acid dimer (trade name "ARONIX M-5600" available from Toagosei Co., Ltd.), acrylic acid trimer; carboxyl group-containing unsaturated monomers including anhydrides of unsaturated dicarboxylic acids such as itaconic acid anhydride, maleic acid anhydride, fumaric acid anhydride, etc., and the like; hydroxyl group-containing unsaturated monomers such as 2-hydroxyethyl acrylate, 2-hydroxypropyl acrylate, 2-hydroxybutyl acrylate, etc.; epoxy group-containing unsaturated monomers such as glycidyl (meth)acrylate, methylglycidyl (meth)acrylate, etc.; amino group-containing unsaturated monomers such as aminoethyl (meth)acrylate, N,N-dimethylaminoethyl (meth)acrylate, t-butylaminoethyl (meth)acrylate, etc.; amide group-containing unsaturated monomers such as (meth)acrylamide, N,N-dimethyl (meth)acrylamide, N,N-diethyl (meth)acrylamide, N-isopropyl (meth)acrylamide, N-butyl (meth)acrylamide, N-methoxymethyl (meth)acrylamide, N-methylol (meth)acrylamide, N-methylolpropane (meth)acrylamide, etc.; cyano group-containing unsaturated monomers such as (meth)acrylonitrile, etc.; maleimide group-containing monomers such as N-cyclohexylinaleimide, N-isopropylmaleimide, N-laurylmaleimide, N-phenylmaleimide, etc.; itaconimide-group-containing monomers such as N-methylitaconimide, N-ethylitaconimide, N-butylitaconimide, N-octylitaconimide, N-2-ethylhexylitaconimide, N-cyclohexylitaconimide, N-laurylitaconimide, etc.; succinimide group-containing monomers such as N-(meth)acryloyloxymethylene succinimide, N-(meth)acryloyl-6-oxyhexamethylene succinimide, N-(meth)acryloyl-8-oxyoctamethylene succinimide, etc.; vinyl group-containing heterocyclic compounds such as N-vinylpyrrolidone, N-(1-methylvinyl) pyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, (meth)acryloylmorpholine, etc.; sulfonate group-containing unsaturated monomers such as styrene sulfonate, allylsulfonic acid, 2-(meth)acrylamide-2-methyl-propanesulfonic acid, (meth)acrylamide propanesulfonic acid, sulfopropyl (meth)acrylate, (meth)acryloxynaphthalene sulfonic acid, etc.; phosphate group-containing unsaturated monomers such as 2-hydroxyethylacryloyl phosphate, etc.; functional monomers such as 2-methacryloyloxyethyl isocyanate, etc.; and the like. Among these, one species may be used solely, or two or more species may be used together.

In the monomer composition (A), the reactive functional group-containing monomer content is usually above zero part by weight, but 50 parts by weight or less, preferably 0.5 to 30 parts by weight, or more preferably 1 to 20 parts by weight relative to 100 parts by weight of a total amount of the monomer composition (A). With the reactive functional group-containing monomer content being within these ranges in the monomer composition (A), when using a crosslinking agent having crosslinking reactivity with the functional group, the resulting acrylic polymer (A) and the crosslinking agent can form crosslinks favorably, whereby a PSA having excellent heat resistance, solvent resistance and anchoring ability, etc., can be formed.

The monomer composition (A) may comprise other co-polimerizable monomer(s) besides the alkyl (meth)acrylate and the reactive functional group-containing monomer.

Examples of the co-polymerizable monomers include vinyl ester group-containing monomers such as vinyl acetate, etc.; aromatic unsaturated monomers such as styrene, vinyl toluene, etc.; (meth)acrylic alicyclic hydrocarbon ester monomers such as cyclopentyl di(meth)acrylate, isobornyl (meth)acrylate, etc.; alkoxy-group-containing unsaturated monomers such as methoxyethyl (meth)acrylate, ethoxyethyl (meth)acrylate, etc.; olefmic monomers such as ethylene, propylene, isoprene, butadiene, isobutylene, etc.; vinyl-ether-based monomers such as vinyl ether, etc.; halogen-atom-containing unsaturated monomers such as vinyl chloride, etc.; and others including acrylate-based monomers containing a heterocycle or halogen atom, such as tetrahydrofurfuryl (meth)acrylate, fluoro(meth)acrylates, etc.

Further examples of co-polymerizable monomers include polyfunctional monomers. Examples of polyfunctional monomers include (mono or poly)alkylene glycol di(meth)acrylates including (mono or poly)ethylene glycol di(meth)acrylates such as ethylene glycol di(meth)acrylate, diethylene glycol di(meth)acrylate, triethylene glycol di(meth)acrylate, tetraethylene glycol di(meth)acrylate, etc., (mono or poly)propylene glycol di(meth)acrylates such as propylene glycol di(meth)acrylate, etc., and the like; as well as trimethylolpropane tri(meth)acrylate, neopentyl glycol di(meth)acrylate, 1,6-hexane-di-ol di(meth)acrylate, pentaerythritol di(meth)acrylate, trimethylolpropane tri(meth)acrylate, tetramethylolmethane tri(meth)acrylate, pentaerythritol tri(meth)acrylate, dipentaerythritol hexa(meth)acrylate, divinylbenzene, and so on. Polyfunctional monomers also include epoxy acrylates, polyester acrylates, urethane acrylates and the like.

Co-polymerizable monomers include alkoxysilyl-group-containing vinyl monomers. Alkoxysilyl-group-containing vinyl monomers include silicone-based (meth)acrylate monomers, silicone-based vinyl monomers, and so on.

Examples of silicone-based (meth)acrylate monomers include (meth)acryloxyalkyl-trialkoxysilanes such as (meth)acryloxymethyl-trimethoxysilane, (meth)acryloxymethyl-triethoxysilane, 2-(meth)acryloxyethyl-trimethoxysilane, 2-(meth)acryloxyethyl-triethoxysilane, 3-(meth)acryloxypropyl-trimethoxysilane, 3-(meth)acryloxypropyl-triethoxysilane, 3-(meth)acryloxypropyl-tripropoxysilane, 3-(meth)acryloxypropyl-triisopropoxysilane, 3-(meth)acryloxypropyl-tributoxysilane, etc.; (meth)acryloxyalkyl alkyl-dialkoxysilanes such as (meth)acryloxymethyl-methyldimethoxysilane, (meth)acryloxymethyl-methyldiethoxysilane, 2-(meth)acryloxyethyl-methyldimethoxysilane, 2-(meth)acryloxyethyl-methyldiethoxysilane, 3-(meth)acryloxypropyl-methyldimethoxysilane, 3-(meth)acryloxypropyl-methyldiethoxysilane, 3-(meth)acryloxypropyl-methyldipropoxysilane, 3-(meth)acryloxypropyl-methyldiisopropoxysilane, 3-(meth)acryloxypropyl-methyldibutoxysilane, 3-(meth)acryloxypropyl-ethyldimethoxysilane, 3-(meth)acryloxypropyl-ethyldiethoxysilane, 3-(meth)acryloxypropyl-ethyldipropoxysilane, 3-(meth)acryloxypropyl-ethyldiisopropoxysilane, 3-(meth)acryloxypropyl-ethyldibutoxysilane, 3-(meth)acryloxypropyl-propyldimethoxysilane, 3-(meth)acryloxypropyl-propyldiethoxysilane, etc.; and their corresponding (meth)acryloxyalkyl-dialkyl(mono)alkoxysilanes; and so on.

Examples of silicone-based vinyl monomers include vinyltrialkoxysilanes such as vinyltrimethoxysilane, vinyltriethoxysilane, vinyltripropoxysilane, vinyltriisopropoxysilane, vinyltributoxysilane, etc., and their corresponding vinylalkyldialkoxysilanes and vinyldialkylalkoxysilanes; vinylalkyltrialkoxysilanes such as vinylmethyltrimethoxysilane, vinylmethyltriethoxysilane, β-vinylethyltrimethoxysilane, β-vinylethyltriethoxysilane, γ-vinylpropyltrimethoxysilane, γ-vinylpropyltriethoxysilane, γ-vinylpropyltripropoxysilane, γ-vinylpropyltriisopropoxysilane, γ-vinylpropyltributoxysilane, etc., and their corresponding (vinylalkyl)alkyldialkoxysilanes and (vinylalkyl)dialkyl(mono)alkoxysilanes; and so on.

With use of an alkoxysilyl group-containing monomer as a co-polymerizable monomer, alkoxysilyl groups are incorporated into the polymer chain, allowing formation of crosslinking structures via reactions among the alkoxysilyl groups.

These co-polymerizable monomers are used singly or in combination. The amount of co-polymerizable polymers added in the monomer composition (A) is, for instance, preferably in a range above zero part by weight, but 40 parts by weight or less, or more preferably above zero part by weight, but 30 parts by weight or less, relative to 100 parts by weight of a total amount of the monomer composition (A).

With respect to the acrylic polymer (A), it is important to select the monomers so that its glass transition temperature peak detected by DSC is at -25 °C or below. When the glass transition temperature peak by DSC is above -25 °C, the wettability decreases, resulting in insufficient adhesive strength.

The acrylic polymer (A) can be obtained by polymerizing the monomer composition (A) by a polymerization method such as emulsion polymerization and so on.

In emulsion polymerization, polymerization is carried out in water with the monomer composition (A) along with suitable addition of a polymerization initiator, an emulsifier, and a chain transfer agent if necessary, etc. More specifically, for instance, can be employed a known emulsion polymerization method such as all-at-once supply method (one batch polymerization method), monomer dropping method, monomer emulsion dropping method, etc. As a monomer dropping method, can be suitably selected either continuous dropping or portionwise dropping. Although the reaction conditions, etc. can be appropriately selected, the polymerization temperature is, for instance, 20 °C to 100 °C.

The polymerization initiator is not particularly limited and a polymerization initiator usually used in emulsion polymerization can be used. Examples include azo-based initiators such as 2,2'-azobisisobutyronitrile, 2,2'-azobis(2-methylpropionamidine) disulfate salt, 2,2'-azobis(2-methylpropionamidine) dihydrochloride salt, 2,2'-azobis(2-amidinopropane) dihydrochloride salt, 2,2'-azobis[N-(2-carboxyethyl)-2-methylpropionamidine] hydrate, 2,2'-azobis(N,N'-dimethylene isobutylamidine), 2,2'-azobis[2-(2-imidazolin-2-yl)propane] dihydrochloride salt, etc.; persulfate salt-based initiators such as potassium persulfate, ammonium persulfate, etc.; peroxide-based initiators such as benzoyl peroxide, t-butyl hydroperoxide, hydrogen peroxide, etc.; substituted ethane-based initiators such as phenyl-substituted ethane, etc.; carbonyl-based initiators such as aromatic carbonyl compounds, etc.; redox-based initiators such as a combination of a persulfate salt and sodium hydrogen sulfite, a combination of a peroxide and sodium ascorbate, etc.; and so on.

These polymerization initiators are used singly or in combination, as appropriate. Although the amount of the polymerization initiator to be added can be suitably selected, it is, for instance, 0.005 to 1 part by weight or preferably 0.01 to 0.8 part by weight relative to 100 parts by weight of a total amount of the monomer composition (A).

The emulsifier is not particularly limited and an emulsifier usually used in emulsion polymerization can be used. Examples include anionic emulsifiers such as sodium lauryl sulfate, ammonium lauryl sulfate, sodium dodecyl benzene sulfonate, sodium polyoxyethylene lauryl sulfate, sodium polyoxyethylene alkyl ether sulfates, ammonium polyoxyethylene alkyl phenyl ether sulfates, sodium polyoxyethylene alkyl phenyl ether sulfates, sodium polyoxyethylene alkyl sulfosuccinates, etc.; non-ionic emulsifiers such as polyoxyethylene alkyl ethers, polyoxyethylene alkyl phenyl ethers, polyoxyethylene aliphatic acid esters, polyoxyethylene-polyoxypropylene block polymers, etc.; and so on. Alternatively, may be used radically polymerizable (reactive) emulsifiers (e.g., HS-10 (available from Dai-Ichi Kogyo Seiyaku Co., Ltd.)) having structures of these anionic emulsifiers or non-ionic emulsifiers in which radically polymerizable (reactive) groups such as propenyl group, ally ether group, etc., have been introduced.

These emulsifiers can be used singly or in combination. The amount of the emulsifier to be added is, for instance, 0.2 to 10 parts by weight or preferably 0.5 to 5 parts by weight relative to 100 parts by weight of a total amount of the monomer composition.

A chain transfer agent, which adjusts the molecular weight of a polymer, can be used as necessary

The chain transfer agent includes chain transfer agents usually used in emulsion polymerization. Examples thereof include mercaptans such as 1-dodecanethiol, mercaptoacetic acid, 2-mercaptoethanol, 2-ethylhexyl thioglycolate, 2,3-dimethylmercapto-1-propanol, and so on. These chain transfer agents are used singly or in combination, as appropriate. The amount of the chain transfer agent to be added is, for instance, 0.001 to 0.5 part by weight relative to 100 parts by weight of a total amount of the monomer composition (A).

In order to increase the stability of the acrylic polymer (A) in an emulsion, it can be adjusted to, for example, pH 7 to 9 or preferably pH 7 to 8, for instance, with aqueous ammonia or the like.

The acrylic polymer (A) thus obtained has a gel fraction (ethyl acetate-insoluble portion) of preferably zero to 70 % by weight, more preferably 0.5 to 50 % by weight, or even more preferably 1 to 40 % by weight. When the gel fraction of the acrylic polymer (A) is within these ranges, the PSA after addition of a crosslinking agent does not have an excessively high gel fraction, and the resulting PSA exhibits sufficient adhesive strength. The gel fraction of the acrylic polymer (A) is measured by a method described later in Examples.

The acrylic polymer (A) can have a weight average molecular weight (Mw) of sol (or simply "weight average molecular weight" hereinafter) of, for instance, $20 \times 10^4$ to $230 \times 10^4$. With it being within this range, the adhesivenss to plastic film can be further increased. The weight average molecular weight (Mw) is measured by a method described later in Examples.

In the present invention, it is preferable that at least either the weight average molecular weight obtained with THF (tetrahydrofuran) as the GPC measurement solvent or the weight average molecular weight obtained with DMF (N,N-dimethylformamide) is within the range.

The acrylic polymer (A) thus prepared has a solubility parameter (SP value) of preferably 18 to 24 or more preferably 19 to 23.5. When it is within these ranges, it has a high affinity to the acrylic polymer (B) and brings about sufficient adhesive strength as a PSA.

Herein, the solubility parameter (SP value) is generally used as a measure of the polarity of a compound, and refers to a value determined with the following equation (2) devised by Fedors.

[Math 1]

$$\text{SP value} = \left( \sum \Delta e_i \Big/ \sum \Delta v_i \right)^{1/2} \qquad \cdots (2)$$

It is noted that $\Delta e_i$ represents the vaporization energy of an atom or an atomic group while $\Delta v_i$ represents the molar volume of an atom or an atomic group. These values can be obtained from, for instance, Journal of the Adhesive Society of Japan, Vol. 22, No. 10 (1986), p. 566.

(ii) (Meth)acrylic polymer (B)

The acrylic polymer (B) can be obtained by polymerizing a monomer composition (B) comprising an alkyl (meth)acrylate as a primary component and further comprising a reactive functional group-containing monomer, and has a higher glass transition temperature than the acrylic polymer (A).

As the alkyl (meth)acrylate that can be contained in monomer composition (B), a preferable alkyl (meth)acrylate has a homopolymer glass transition temperature (Tg) of 10 °C or above.

Examples of such alkyl (meth)acrylates include cyclohexyl acrylate (Tg: 19 °C), cyclohexyl methacrylate (Tg: 83 °C), dicyclopentanyl acrylate (Tg: 120 °C), dicyclopentanyl methacrylate (Tg: 175 °C), isobomyl acrylate (Tg: 94 °C), isobornyl methacrylate (Tg: 150 °C), t-butyl acrylate (Tg: 43 °C), t-butyl methacrylate (Tg: 118 °C), isobutyl acrylate (Tg: -24 °C), isobutyl methacrylate (Tg: 53 °C), ethyl acrylate (Tg: -22 °C), ethyl methacrylate (Tg: 65 °C), methyl acrylate (Tg: 10 °C), methyl methacrylate (Tg: 105 °C), and the like.

With respect to the homopolymer Tg values of alkyl (meth)acrylates other than those listed above, the values can be determined from "Polymer Handbook" (4th edition, John Wiley & Sons, Inc., Year 1999). When several Tg values are listed in this literature, a value indicated as "conventional" is used.

For the homopolymer Tg values of monomers not listed in the literature, can be used, for example, values obtainable by the following measurement method (see Japanese Patent Application Publication No. 2007-51271). In particular, to a reaction vessel equipped with a thermometer, a stirrer, a nitrogen inlet and a condenser, are added 100 parts by weight of monomer, 0.2 part by weight of azobisisobutyronitrile, and 200 parts by weight of ethyl acetate as a polymerization solvent, and the mixture is stirred for one hour under a nitrogen gas flow. After oxygen is removed in this way from the polymerization system, the mixture is heated to 63 °C and the reaction is carried out for 10 hours. Then, it is cooled to room temperature, and a homopolymer solution having 33 % by weight solids content is obtained. Then, this homopolymer solution is applied onto a release liner by flow coating and allowed to dry to prepare a test sample (a sheet of homopolymer) of about 2 mm thickness. This test sample is cut out into a disc of 7.9 mm diameter and is placed between parallel plates; and while applying a shear strain at a frequency of 1 Hz using a rheometer (ARES, available from Rheometrics Scientific, Inc.), the viscoelasticity is measured in the shear mode over a temperature range of -70 °C to 150 °C at a heating rate of 5 °C/min; and the temperature value at the maximum of the tan $\delta$ curve is taken as the Tg of the homopolymer.

The amount of the alkyl (meth)acrylate added is preferably 60 to 99.9 parts by weight, or more preferably 70 to 98 parts by weight, relative to 100 parts by weight of a total amount of the monomer composition (B). Such alkyl (meth)acrylates are used singly or in combination.

Simlarly to the monomer composition (A) described earlier, the monomer composition (B) comprises, other than the alkyl (meth)acrylate, a reactive functional group-containing monomer having a reactive functional group in its molecule.

The reactive functional group-containing monomer include the various monomers having reactive functional groups described under "(i) (Meth)acrylic polymer (A)".

In the monomer composition (B), the reactive functional group-containing monomer content is usually above zero part by weight, but 50 parts by weight or less, preferably 0.5 to 30 parts by weight, more preferably 0.5 to 15 parts by weight, or particularly preferably 1 to 8 parts by weight, relative to 100 parts by weight of a total amount of the monomer composition (B). With the reactive functional group-containing monomer content being within these ranges in the monomer composition (B), when using a crosslinking agent having crosslinking reactivity with the functional group, the resulting acrylic polymer (B) and the crosslinking agent can form crosslinks favorably, whereby a PSA having excellent heat resistance, solvent resistance and anchoring ability, etc., can be formed.

The monomer composition (B) may comprise other co-polimerizable monomer(s) besides the alkyl (meth)acrylate and the reactive functional group-containing monomer. Such co-polymerizable monomers include the various monomers having reactive functional groups described under "(i) (Meth)acrylic polymer (A)". These monomers are used singly or in combination.

The amount of co-polymerizable polymers added in the monomer composition (B) is, for instance, preferably in a range above zero part by weight, but 40 parts by weight or less, or more preferably above zero part by weight, but 30 parts by weight or less, relative to 100 parts by weight of a total amount of the monomer composition (B).

With respect to the acrylic polymer (B), it is important to select the monomers so that its glass transition temperature peak detected by DSC is 30 °C or above, but 190 °C or below. When the glass transition temperature peak by DSC is below 30 °C, it is likely to result in an insufficient anchoring strength while a peak above 190 °C tends to bring about a lower adhesive strength.

Similarly to the acrylic polymer (A), the acrylic polymer (B) can be obtained by polymerizing the monomer composition (B) by a polymerization method such as emulsion polymerization and so on. In emulsion polymerization, polymerization is carried out in water with the monomer composition along with suitable addition of a polymerization initiator, an emulsifier, and a chain transfer agent if necessary, etc.

With respect to the chain transfer agent, the various chain transfer agents described earlier under "(i) (Meth)acrylic polymer (A)" can be used as well. The amount of the chain transfer agent added can be, for instance, 0.001 to 20 parts by weight relative to 100 parts by weight of a total amount of the monomer composition (B).

Similarly to the acrylic polymer (A), to increase the stability of the acrylic polymer (B) in an emulsion, it can be adjusted to, for example, pH 7 to 9 or preferably pH 7 to 8, for instance, with aqueous ammonia and the like.

The acrylic polymer (B) thus prepared can have a weight average molecular weight (Mw) of sol (or simply "weight average molecular weight" hereinafter) of, for instance, 2000 to 5000000, or more preferably 2000 to 4000000. With it being within these ranges, the adhesive strength can be further increased. The weight average molecular weight (Mw) is measured by the method described later in Examples.

In the present invention, it is preferable that at least either the weight average molecular weight obtained with THF as the GPC measurement solvent or the weight average molecular weight obtained with DMF is within these ranges.

The acrylic polymer (B) thus prepared has a solubility parameter (SP value) of preferably 18 to 24 or more preferably 19 to 23.5. When it is within these ranges, it has a high affinity to the acrylic polymer (A) and brings about sufficient adhesive strength as a PSA.

Similarly to the acrylic polymer (A), the SP value of the acrylic polymer (B) also refers to a value determined with the equation (2) devised by Fedors.

While the acrylic polymer (A) to the acrylic polymer (B) ratio is not particularly limited, it is preferable that they are contained at a solid weight ratio (acrylic polymer (A)/acrylic polymer (B)) of 99/1 to 60/40, more preferably 98/2 to 70/30, or even more preferably 95/5 to 75/25. When their content ratio is within these ranges, the anchoring strength and the adhesive strength is further increased.

In mixing the acrylic polymer (A) and the acrylic polymer (B), when emulsions of the respective acrylic polymers are mixed, in order to evenly mix these, before and after the mixing, a basic compound such as aqueous ammonia, etc., or the like may be added to the respective acrylic polymer emulsions to form acrylic polymer salts.

(iii) Crosslinking agent (C)

The water-dispersed PSA composition according to the present invention comprises a crosslinking agent (C) that reacts with the reactive functional groups. The crosslinking agent (C) is not particularly limited, other than being a compound having two or more functional groups that react with the reactive functional groups. Examples thereof include isocyanate-based crosslinking agents, epoxy-based crosslinking agents, oxazoline-based crosslinking agents, aziridine-based crosslinking agents, metal chelate-based crosslinking agents, carbodiimide-based crosslinking agents and the like. The crosslinking agents are not particularly limited, and an oil-soluble or water-soluble crosslinking agent is used.

When using an epoxy-based crosslinking agent, for example, crosslinking structures can be formed with inclusion of a carboxyl group, a hydroxyl group such as a phenol-based hydroxyl group and the like, an amino group, an acid anhydride group, etc., as the reactive functional groups in the acrylic polymers.

The epoxy-based crosslinking agent is not particularly limited. Examples include compounds having two or more epoxy groups per molecule, such as bisphenol A-epichlorohydrin type epoxy-based resins, ethylene diglycidyl ether, polyethylene glycol diglycidyl ether, glycerin diglycidyl ether, glycerin triglycidyl ether, 1,6-hexanediol diglycidyl ether, trimethylolpropane triglycidyl ether, diglycidyl aniline, diamineglycidylamine, N,N,N',N'-tetraglycidyl-m-xylylenediamine, 1,3-bis(N,N-diglycidylaminomethyl)cyclohexane, and so on.

Among these, N,N,N',N'-tetraglycidyl-m-xylylenediamine and 1,3-bis(N,N-diglycidylaminomethyl)cyclohexane are preferably used as they have good reactivity and can form well-balanced crosslinking structures.

When an isocyanate-based crosslinking agent is used, crosslinking structures can be formed with inclusion of a hydroxyl group, an amino group, a carboxyl group, etc., as the reactive functional groups in the acrylic polymers.

The isocyanate group-containing compound is not particularly limited. Examples thereof include diphenylmethane diisocyanate (MDI), tolylene diisocyanate (TDI), hexamethylene diisocyanate (HDI), isophorone diisocyanate (IPDI), trimethylhexamethylene diisocyanate (TMDI), xylene diisocyanate (XDI), naphthalene diisocyanate (NDI), trimethylolpropane (TMP)-adduct TDI, TMP- adduct IPDI, and so on.

When the isocyanate-based crosslinking agent is used, a catalyst may be used to facilitate the crosslinking reaction. As such catalysts, amine-based catalysts and organometallic catalysts are general, with examples including amine-based catalysts such as N,N-dimethylcyclohexylamine, triethylamine, pyridine, N-methylmorpholine, N,N,N',N'-tetramethylethylene diamine, bis-2-dimethylamino ether, triethylene diamine, triethanolamine, etc.; organometallic catalysts such as tin(II) octanoate, tin(II) oleate, dibutyltin diacetate, dibutyltin dilaurate, dimethyltin mercaptide, dimethyltin dimaleate, lead octanoate, etc.; and the like.

Among the catalysts, one species may be used solely, or two or more species may be used together, usually in an amount of 0.001 to 5.0 parts by weight relative to 100 parts by weight of the crosslinking agent (C).

When an oxazoline-based crosslinking agent is used, crosslinking structures can be formed with inclusion of a carboxyl group, a hydroxyl group, an aromatic mercapto group, an acid anhydride, etc., as the reactive functional groups in the acrylic polymers.

The oxazoline-based crosslinking agent is not particularly limited, with examples including the crosslinking agents exemplified in Japanese Patent Application Publication No. 2009-001673. Specific examples include a compound comprising a main chain formed with an acrylic structure or a styrene structure with the main chain having an oxazoline group in its side chain, and preferably including oxazoline group-containing acrylic polymers comprising a main chain formed with an acrylic structure with the main chain having an oxazoline group in its side chain.

When an aziridine-based crosslinking agent is used, crosslinking structures can be formed with inclusion of a carboxyl group, a glycidyl group, an isocyanate group, etc., as the reactive functional groups in the acrylic polymers.

The aziridine-based crosslinking agent is not particularly limited. Examples thereof include trimethylolpropane tris[3-(1-aziridinyl)propionate and trimethylolpropane tris[3-(1-(2-methyl)aziridinylpropionate)].

When a metal chelate-based crosslinking agent is used, crosslinking structures can be formed with inclusion of a carboxyl group, a hydroxyl group, a glycidyl group, an isocyanate group, etc., as the reactive functional groups in the acrylic polymers.

The metal chelate-based crosslinking agent is not particularly limited, with examples including the crosslinking agents exemplified in Japanese Patent Application Publication No. 2007-063536. Specific examples include, for instance, aluminum chelate-based compounds, titanium chelate-based compounds, zinc chelate-based compounds, zirconium chelate-based compounds, iron chelate-based compounds, cobalt chelate-based compounds, nickel chelate-based compounds, tin chelate-based compounds, manganese chelate-based compounds, chromium chelate-based compounds, and the like.

When a carbodiimide-based crosslinking agent is used, crosslinking structures can be formed with inclusion of a carboxyl group, a hydroxyl group, an aromatic mercapto group, an acid anhydride, etc., as the reactive functional groups in the acrylic polymers.

The carbodiimide-based crosslinking agent may comprise two or more carbodiimide groups in its molecule. The carbodiimide group represents a group (-N=C=NH, -N=C=N-) resulting from subtraction of one or two hydrogen atoms from a carbodiimide (HN=C=NH). Examples include compounds represented by $R^3$-N=C=N-$R^4$-N=C=N-$R^5$ ($R^3$, $R^4$, $R^5$ all represent hydrocarbon groups) and the like.

As the carbodiimide-based crosslinking agent, a polymer (polycarbodiimide) having a carbodiimide group, or the like can be suitably used. It is particularly preferable to use a polymer comprising, other than a carbodiimide group, a highly hydrophilic moiety such as an ethylene oxide ($-CH_2-CH_2-O-$) moiety, etc. Examples of a commercial polymer (polycarbodiimide) having a carbodiimide group that can be used as the carbodiimide-based crosslinking agent include Nisshinbo Chemical Inc. products under trade names "CARBODILITE V-02", "CARBODILITE V-02-L2", "CARBODILITE V-04", "CARBODILITE E-01", "CARBODILITE E-02", and the like.

The crosslinking agent (C) is selected so as to react with both the functional group contained in the acrylic polymer (A) and the functional group contained in the acrylic polymer (B). In particular, when one species of crosslinking agent (C) is used solely, a compound that reacts with both the functional group contained in the acrylic polymer (A) and the functional group contained in the acrylic polymer (B) should be selected as the crosslinking agent (C).

When two or more species of crosslinking agent (C) are used, at least one species of crosslinking agent (C) is selected so that it reacts with both the functional group contained in the acrylic polymer (A) and the functional group contained in the acrylic polymer (B).

When using a crosslinking agent (C) that reacts only with the functional group contained in one of the acrylic polymers, interparticle crosslinks is not formed in the other acrylic polymer, whereby sufficient heat resistance cannot be obtained The crosslinking agent (C) is preferably selected so as to react with a functional group that is commonly contained in the acrylic polymer (A) and the acrylic polymer (B).

In the water-dispersed PSA composition according to the present invention, the amount of the crosslinking agent (C) used can be suitably modified in accordance with the type of crosslinking agent used. It is usually used in an amount of 0.0007 to 10 parts by weight or preferably 0.001 to 5 parts by weight relative to 100 parts by weight of a total amount of the acrylic polymer (A) and the acrylic polymer (B) combined. When using the crosslinking agent (C) within these ranges, a PSA layer can be formed to have excellent heat resistance and anchoring ability.

(iv) Tackifier

The water-dispersed PSA composition according to the present invention may further comprise a tackifier. As the tackifier, for example, can be used one, two or more species selected from various tackifier resins such as rosin-based resins, rosin-derivative resins, petroleum-based resins, terpene-based resins, phenol-based resins, ketone-based resins, and so on.

As the tackifier, from the standpoint of increasing the cohesive strength under a high temperature environment, for example, a preferable tackifier has a softening point of 100 °C or above, or more preferably of 140 °C or above. Examples of tackifiers having such softening points include "SUPER ESTER E-865; softening point 160 °C", "SUPER ESTER E-865NT; softening point 160 °C", "SUPER ESTER E-650NT; softening point 160 °C", "TAMANOL E-100; softening point 150 °C", "TAMANOL E-200; softening point 150 °C", "TAMANOL 803L; softening point 145 °C to 160 °C", "PENSEL D-160; softening point 150 °C", and "PENSEL KK; softening point 165 °C" available from Arakawa Chemical Industries, Ltd.; "YS POLYSTER S-series", "YS POLYSTER T-series", and "MIGHTY ACE G-series" available from Yasuhara Chemical Co., Ltd.; and the like while not limited to these. These tackifiers are used singly or in combination. With use of a tackifier having a softening point of about 100 °C or above, for example, higher levels of cohesive strength and other properties (peel strength, edge-peel resistance, etc.) can be obtained.

When used, the tackifier is typically added to aqueous emulsions of the acrylic polymers. The mode of addition of the tackifier is not particularly limited while it is usually added as an aqueous dispersion (a tackifier emulsion) in which the tackifier is dispersed in water.

The amount of the tackifier added can be, for example, 50 parts by weight or less relative to 100 parts by weight of a total amount of the acrylic polymers (A) and (B) combined based on non-volatiles (solid content). Usually, the amount added is suitably 40 parts by weight or less. Although the lower limit of the tackifier content is not particularly limited, when it is 1 part by weight or more relative to 100 parts by weight of the acrylic polymers (A) and (B) combined, good results can be obtained.

In a preferable embodiment of the PSA composition disclosed herein, the amount of the tackifier added (its content) is 5 to 40 parts by weight (typically 5 to 30 parts by weight, e.g. 15 to 30 parts by weight) relative to 100 parts by weight of the acrylic polymers (A) and (B) combined.

(v) Other components

The water-dispersed PSA composition according to the present invention may contain, as necessary, viscosity-adjusting agents, release-adjusting agents, plasticizers, softeners, fillers, colorants (pigments and dyes, etc.), antioxidants, surfactants, leveling agents, anti-foaming agents, and so on. The amounts of these additives added are not particularly limited and can be suitably selected.

The water-dispersed PSA composition according to the present invention can comprise, as optional components, polymers other than the aforementioned acrylic polymers. As such optional polymers, polymers having properties of rubber or elastomer are preferable. Examples thereof include ethylene-vinyl acetate copolymers, acrylic rubber, natural rubber (NR), isoprene rubber (IR), styrene-butadiene rubber (SBR), chloroprene rubber (CR), butyl rubber (BR), ethylene-propylene rubber (EPM, EPDM), polyisobutylene, styrene-ethylene-butylene-styrene copolymers (SEBS), acrylonitrile-butadiene copolymers (NBR), styrene-butadiene-styrene block copolymers (SBS), styrene-isoprene-styrene block copolymers (SIS), poly(vinyl alkyl ether)s (e.g. poly(vinyl isobutyl ether)) and the like. Among these, one species may be used solely, or two or more species may be used in combination.

When such optional polymers are used, for example, they can be added, to an aqueous emulsion of the aforementioned acrylic polymers, as an emulsion in which the polymers are dispersed in water.

It is usually suitable that the optional polymer content (amount added) is50 parts by weight or less (e.g. 5 to 50 parts by weight) relative to 100 parts by weight of the acrylic polymers (A) and (B) combined based on non-volatiles (solid content). The amount of such optional polymers added can be 5 parts by weight or less, or the PSA composition may have a composition that is essentially free of the optional polymers

(II) PSA

The PSA according to the present invention is formed with a water-dispersed PSA composition described above. The PSA can be obtained, for instance, by applying the water-dispersed PSA composition to a substrate by a known coating method and allowing it to dry. While the drying temperature may vary depending on the type of substrate, it can be, for instance, in a range of 40 °C to 120 °C.

The method for applying the water-dispersed PSA composition to a substrate is not particularly limited and it can be carried out using, for instance, a gravure roll coater, a reverse roll coater, a kiss roll coater, a dip roll coater, a bar coater, a knife coater, a spray coater, a fountain dye coater, a closed edge dye coater, and so on. The PSA may be formed also by applying the water-dispersed PSA composition to a release sheet to form a PSA layer followed by transferring it to a substrate.

(III) PSA sheet

The PSA sheet according to the present invention comprises a PSA layer formed with a water-dispersed PSA composition described above.

The PSA sheet according to the present invention may have a configuration of an on-substrate PSA sheet where such a PSA layer is provided on one or each face of a substrate sheet (support), or it may have a configuration of a substrate-free PSA sheet where the PSA layer is held on a release sheet (which may be a substrate sheet having a release surface). The concept of the PSA sheet referred to here encompasses those called as PSA tapes, PSA labels, PSA films, and so on.

Although the PSA layer is typically formed in a continuous manner, it is not limited to such a form and it can be formed into, for example, a regular or random pattern of dots, stripes, and so on. The PSA sheet provided by the present invention may be in a roll or in a flat sheet. Alternatively, the PSA sheet can be processed into various other forms.

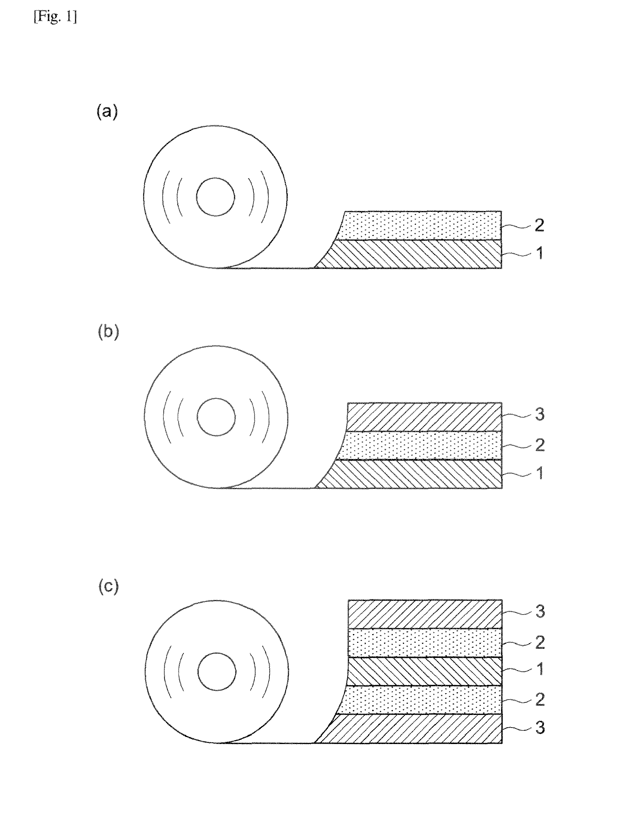

The PSA sheet according to the present invention can have, for example, cross-sectional constitutions schematically illustrated in Figs. 1(a)-(c).

Fig. 1 (a) shows a constitution example of an on-substrate PSA sheet that is adhesively single-faced, where a PSA layer 2 is provided on one face of a substrate 1. Such a PSA sheet has a release surface on one face of substrate 1 that is opposite of the face provided with PSA layer 2. As shown in Fig. 1(a), the PSA sheet can be formed into a roll by winding it in a way that the release surface of substrate 1 laminated with PSA layer 2 comes in contact with the PSA layer 2 laminated on the substrate 1.

The PSA sheet shown in Fig. 1(b) has a constitution where a PSA layer 2 is protected with a release sheet 3 having a release surface at least on the PSA layer side. It can also be formed into a roll by winding it.

The PSA sheet shown in Fig. 1(c) has a constitution where a PSA layer 2 is provided on each face of a substrate 1, with each PSA layer 2 being protected with a release sheet 3 having a release surface at least on the PSA layer side. The PSA sheet shown in Fig. 1(c) can be formed into a roll, for example, by forming PSA layers 2 on release sheets 3 in asdvance to adhere them to the front and back faces of a substrate 1 and winding the resultant.

In the PSA sheet shown in Fig. 1(c), while a PSA layer 2 is provided on each face of a substrate 1, these PSA layers 2 may be formed with PSAs having the same composition, or may be individually formed with PSAs having different compositions.

Examples of a material forming the substrate include polyolefm-based films comprising polyolefins such as polyethylenes, polypropylenes, ethylene-propylene copolymers, etc.; polyester-based films comprising polyester such as polyethylene terephthalate, etc.; plastic films comprising plastic such as polyvinyl chloride, etc.; papers such as Kraft papers, Washi papers, etc.; fabrics such as cotton fabrics, staple cloth fabrics, etc.; non-woven fabrics such as polyester non-woven fabrics, vinylon non-woven fabrics, etc.; and metal foils.

The plastic films may be non-stretched films, or stretched (uni-axially stretched or bi-axially stretched) films. The substrate surface to be provided with a PSA layer may have been given with a surface treatment such as primer coating, corona discharge treatment, and so on.

The thickness of the PSA layer after dried is not particularly limited, and it is in a range of, for example, 500 $\mu$m or smaller, or preferably 5$\mu$m to 200 $\mu$m

The PSA sheet according to the present invention can ensure adhesion to plastic film without a need for primer coating treatment while not impairing its properties such as adhesive strength, heat resistance, etc.

Specifically, the PSA sheet according to the present invention has an adhesive strength to ABS plate of preferably 5.0 N/20mm or greater, more preferably 6.0 N/20mm or greater, further preferably 7.0 N/20mm or greater, particularly preferably 8.0 N/20mm or greater, or most preferably 9.0 N/20mm or greater.

At the same time, the PSA sheet according to the present invention has an anchoring strength of preferably 2.0 N/19mm or greater, more preferably 2.25 N/19mm or greater, further preferably 2.5 N/19mm or greater, particularly preferably 2.75 N/19mm or greater, or most preferably 3.0 N/19mm or greater.

[Examples]

The present inventions are described more specifically with Examples and Comparative Examples given below. The present inventions are not limited to the following Examples and Comparative Examples by any means. In the following description, "part(s)" and "%" are based on the weight unless otherwise specified.

[Synthetic Example 1]

Into a reaction vessel equipped with a condenser, a nitrogen inlet, a thermometer and a stirrer, was placed an emulsion prepared by adding 96 parts of butyl acrylate (BA), 4 parts of acrylic acid (AA), 0.08 part of tert-dodecanethiol (chain transfer agent) and 2 parts of sodium polyoxyethylene lauryl sulfate (trade name "LATEMUL E118B" available from Kao Corporation) to 220 parts of ion-exchanged water (i.e. an emulsion of starting monomers), and the resultant was stirred under nitrogen flow for one hour. Subsequently, this was heated to 60 °C, and while maintained at 60 °C, was added 0.1 part of 2,2'-azobis[N-(2-carboxyethyl)-2-methylpropionamidine] hydrate (polymerization initiator) (trade name "VA-057" available from Wako Pure Chemical Industries, Ltd), and emulsion polymerization reaction was carried out for 3 hours. To this, 10 % aqueous ammonia was added to adjust the liquid phase to pH 7.5. An aqueous dispersion (emulsion) of an acrylic polymer A1 was thus obtained.

[Synthetic Example 2]

Except that the amount of tert-dodecanethiol was modified from 0.08 part to 0.02 part, an aqueous dispersion (emulsion) of an acrylic polymer A2 was obtained in the same manner as Synthetic Example 1.

[Synthetic Example 3]

Into a reaction vessel equipped with a condenser, a nitrogen inlet, a thermometer and a stirrer, were placed 1 part as solid of an emulsifier (trade name "HITENOL N-17" available from Dai-ichi Kogyo Seiyaku Co., Ltd.) and 50 parts of ion-exchanged water, and the resultant was stirred under nitrogen flow for one hour. Subsequently, this was heated to 80 °C, and 0.24 part of potassium persulfate (polymerization initiator) was added. While this was maintained at 80 °C, to this, was added dropwise for 3 hours an emulsion prepared by adding 95 parts of butyl acrylate (BA), 5 parts of acrylic acid (AA), 2 parts as solid of an emulsifier (trade name "HITENOL N-17" available from Dai-ichi Kogyo Seiyaku Co., Ltd.), 0.089 part of thioglycolic acid to 50 parts of ion-exchanged water (i.e. an emulsion of starting monomers). While the internal temperature was maintained at 80 °C, polymerization was carried out for 2 more hours. To this, 10 % aqueous ammonia was added to adjust the liquid phase to pH 7.5. An aqueous dispersion (emulsion) of an acrylic polymer A3 was thus obtained.

[Synthetic Example 4]

Into a reaction vessel equipped with a condenser, a nitrogen inlet, a thermometer and a stirrer, were placed 0.1 part as solid of an emulsifier (trade name "AQUARON KH-10" available from Dai-ichi Kogyo Seiyaku Co., Ltd.) and 57 parts of ion-exchanged water, and the resultant was stirred under nitrogen flow for one hour. Subsequently, this was heated to 80 °C, and 0.1 part of potassium persulfate (polymerization initiator) was added. While this was maintained at 80 °C, to this, was added dropwise for 3 hours an emulsion prepared by adding 20 parts of 2-ethylhexyl acrylate (2EHA), 69.8 parts of butyl acrylate (BA), 8 parts of methyl methacrylate (MMA), 2 parts of acrylic acid (AA), 0.2 part of diacetone acrylamide (DAAM), 2 parts as solid of an emulsifier (trade name "AQUARON KH-10" and 0.3 part as solid of potassium persulfate) to 30 parts of ion-exchanged water (i.e. an emulsion of starting monomers). While the internal temperature was maintained at 80 °C, 0.06 part as solid of potassium persulfate was added at 30 minutes and at 60 minutes, respectively, after the completion of emulsion addition, and polymerization was carried out for 2 more hours. To this, 10 % aqueous ammonia was added to adjust the liquid phase to pH 7.5. An aqueous dispersion (emulsion) of an acrylic polymer A4 was thus obtained.

[Synthetic Example 5]

Into a reaction vessel equipped with a condenser, a nitrogen inlet, a thermometer and a stirrer, were placed 0.5 part of sodium polyoxyethylene lauryl sulfate (trade name "LATEMUL E118B" available from Kao Corporation) and 16 parts of ion-exchanged water, and the resultant was stirred under nitrogen flow for one hour. This was heated to 60 °C, and was added 0.1 part of 2,2'-azobis[N-(2-carboxyethyl)-2-methylpropionamidine] hydrate (polymerization initiator) (trade name "VA-057" available from Wako Pure Chemical Industries, Ltd.). While this was maintained at 60 °C, to this, was added dropwise for 3 hours an emulsion prepared by adding 96 parts of methyl methacrylate (MAA), 4 parts of acrylic acid (AA), 20 parts of tert-dodecanethiol (chain transfer agent) and 1.5 parts of sodium polyoxyethylene lauryl sulfate (trade name "LATEMUL E118B" available from Kao Corporation) to 91 parts of ion-exchanged water (i.e. an emulsion of starting monomers), and polymerization was carried out for 3 more hours at the same temperature. To this, 10 % aqueous ammonia was added to adjust the liquid phase to pH 7.5, whereby an aqueous dispersion (emulsion) of an acrylic polymer B1 was obtained.

[Synthetic Example 6]

Except that the amount of tert-dodecanethiol was modified from 20 parts to 1 part, an aqueous dispersion (emulsion) of an acrylic polymer B2 was obtained in the same manner as Synthetic Example 5.

[Synthetic Example 7]

Except that the amount of tert-dodecanethiol was modified from 20 parts to 0.1 part, an aqueous dispersion (emulsion) of an acrylic polymer B3 was obtained in the same manner as Synthetic Example 5.

[Synthetic Example 8]

Except that 96 parts of butyl acrylate (BA) was substituted with 96 parts of methyl methacrylate (MMA) and the amount of tert-dodecanethiol was modified from 0.08 part to zero part, an aqueous dispersion (emulsion) of an acrylic polymer B4 was obtained in the same manner as Synthetic Example 1.

[Synthetic Example 9]

Except that 96 parts of butyl acrylate (BA) was substituted with 96 parts of isobornyl methacrylate (IBXMA) and the amount of tert-dodecanethiol was modified from 0.08 part to zero part, an aqueous dispersion (emulsion) of an acrylic polymer B5 was obtained in the same manner as Synthetic Example 1.

[Synthetic Example 10]

Except that 96 parts of butyl acrylate (BA) was substituted with 96 parts of dicyclopentanyl acrylate (DCPA) and the amount of tert-dodecanethiol was modified from 0.08 part to zero part, an aqueous dispersion (emulsion) of an acrylic polymer B6 was obtained in the same manner as Synthetic Example 1.

[Synthetic Example 11]

Except that 96 parts of butyl acrylate (BA) was substituted with 96 parts of t-butyl methacrylate (t-BMA) and the amount of tert-dodecanethiol was modified from 0.08 part to zero part, an aqueous dispersion (emulsion) of an acrylic polymer B7 was obtained in the same manner as Synthetic Example 1.

[Synthetic Example 12]

Except that 96 parts of butyl acrylate (BA) was substituted with 96 parts of t-butyl acrylate (t-BA) and the amount of tert-dodecanethiol was modified from 0.08 part to zero part, an aqueous dispersion (emulsion) of an acrylic polymer B8 was obtained in the same manner as Synthetic Example 1.

[Synthetic Example 13]

Except that 20 parts of 2-ethylhexyl acrylate (2EHA), 69.8 parts of butyl acrylate (BA), 8 parts of methyl methacrylate (MMA), 2 parts of acrylic acid (AA) and 0.2 part of diacetone acrylamide (DAAM) were substituted with 3 parts of 2-ethylhexyl acrylate (2EHA), 95 parts of methyl methacrylate (MMA) and 2 parts of acrylic acid (AA), an aqueous dispersion (emulsion) of an acrylic polymer B9 was obtained in the same manner as Synthetic Example 4.

[Synthetic Example 14]

Except that 96 parts of butyl acrylate (BA) was substituted with 91.2 parts of butyl acrylate (BA) and 4.8 parts of methyl methacrylate (MMA), an aqueous dispersion (emulsion) of an acrylic polymer C1 was obtained in the same manner as Synthetic Example 1.

[Synthetic Example 15]

Except that 96 parts of butyl acrylate (BA) was substituted with 86.4 parts of butyl acrylate (BA) and 9.6 parts of methyl methacrylate (MMA), an aqueous dispersion (emulsion) of an acrylic polymer C2 was obtained in the same manner as Synthetic Example 1.

[Table 1]

| Synthetic Example | Acrylic polymer | Composition (parts by weight) | | | | | | | | | Gel fraction (%) | Sol Mw (x 10$^4$) | SP value (MPa)$^{0.5}$ |
|---|---|---|---|---|---|---|---|---|---|---|---|---|---|
| | | BA | 2EHA | IBXMA | DCPA | MMA | t-BMA | t-BA | DAAM | AA | | | |
| 1 | A1 | 96 | | | | | | | | 4 | 1.7 | 604 | 206 |
| 2 | A2 | 96 | | | | | | | | 4 | 1 4 | 198 | 20.6 |
| 3 | A3 | 95 | | | | | | | | 5 | 35 | 100 | 20.7 |
| 4 | A4 | 69.8 | 20 | | | 8 | | | 0.2 | 2 | 0 | 5 | 20.2 |
| 5 | B1 | | | | | 96 | | | | 4 | 1.5 | 0.3 | 20.8 |
| 6 | B2 | | | | | 96 | | | | 4 | 1.8 | 6 | 20.8 |
| 7 | B3 | | | | | 96 | | | | 4 | 0.3 | 45 | 20.8 |
| 8 | B4 | | | | | 96 | | | | 4 | 67 | 422 | 20.8 |
| 9 | B5 | | | 96 | | | | | | 4 | 85 | - | 21.0 |
| 10 | B6 | | | | 96 | | | | | 4 | 97 | - | 23.0 |
| 11 | B7 | | | | | | 96 | | | 4 | 18 | 335 | 19.3 |
| 12 | B8 | | | | | | | 96 | | 4 | 82 | 333 | 19.8 |
| 13 | B9 | | 3 | | | 95 | | | | 2 | 73 | 15 | 20.5 |
| 14 | C1 | 91.2 | | | | 4.8 | | | | 4 | 51 | 68 | 20.6 |
| 15 | C2 | 86.4 | | | | 9.6 | | | | 4 | 2 | 72 | 20.9 |

EP 2 730 630 A1

[Example 1]

To 90 parts as solid of the acrylic polymer A1 emulsion, was added 10 parts as solid of the acrylic polymer emulsion B1. Subsequently, to 100 parts as solid of the acrylic polymer A1 and the acrylic polymer B 1 combined, was added 0 031 part as solid of a crosslmking agent (trade name "TETRAD C" available from Mitsubishi Gas Chemical Company, Inc.) to prepare a water-dispersed PSA composition.

Subsequently, the resulting water-dispersed PSA composition was thickened with aqueous ammonia. The thickened water-dispersed PSA composition was coated to each of a 25 $\mu$m thick polyethylene terephthalate (PET) substrate and a release sheet (trade name "DIAFOIL" available from Mitsubishi Polyester Film Inc., 38 $\mu$m thick) These were dried at 100 °C for 3 minutes to fabricate respective PSA sheets.

[Examples 2 to 17, Comparative Eamples 1 to 5]

Except that the types and amounts of acrylic polymers as well as the type and amount of crosslinking agent were modified according to Table 2, in the same manner as Example 1, each water-dispersed PSA composition was prepared and then a PSA sheet was fabncated.

(Evaluations)

(1) Weight average molecular weight (Mw)

<Preparation of samples>

The respective acrylic polymer emulsions obtained in respective Examples and Comparative Examples were allowed to dry at 130 °C for 2 hours, and subsequently suspended in THF at room temperature for seven days to extract their THF-soluble portions. Subsequently, each THF-soluble portion was filtered, and the filtrate was concentrated or diluted as necessary (it may be allowed to dry once and then redissolved in THF) to prepare a THF solution containing the THF-soluble portion at a suitable concentration (around 0.1 to 0.3 % by weight).

With respect to the acrylic polymer obtained in Synthetic Example 4, the same procedure described above was carried out with DMF substituted for THF to prepare a DMF solution containing a DMF-soluble portion at a suitable concentration.

<GPC measurement>

Each THF solution prepared was analyzed by gel permeation chromatography under the following conditions:

System: HLC-8320 GPC available from TOSOH
Columns: TSKgel GMH-H(S), 2 pieces connected
Column temperature: 40 °C
Flow rate: 0.5 mL/min

The weight average molecular weight (Mw) was determined based on a calibration curve of polystyrene.

The DMF solution obtained from the acrylic polymer resulted from Synthetic Example 4 was analyzed by gel permeation chromatography under the following conditions:

System: HLC-8320 GPC available from TOSOH
Columns: TSKgel superAWM-H + superAW4000+superAW2500
Column temperature: 40 °C
Flow rate: 0.4 mL/min

The weight average molecular weight was determined based on a calibration curve of polystyrene.

(2) Gel fraction (ethyl acetate-insoluble portion)

The combined weight of twine and porous polytetrafluoroethylene resin membrane of 0.2 $\mu$m diameter (trade name "NITOFURON NTF1122" available from Nitto Denko Corporation) was measured in advance (Wa mg). Approximately 0.1 g of PSA was wrapped into a pouch with the porous membrane, and the opening was tied with the twine, and the pouch was weighed (Wb mg). This pouch was placed in a screw vial of volume 50 mL, and the screw vial was filled with ethyl acetate. After this was left at room temperature for 7 days, the pouch was taken out and allowed to dry at 130 °C for two hours, and the pouch was weighed (Wc mg). The gel fraction was determined by the following equation:

$$\text{Gel fraction (\%)} = (\text{Wc-Wa})/(\text{Wb-Wa}) \times 100$$

The gel fractions of acrylic polymers were measured in the same manner as this method except that the respective acrylic polymer emulsions were allowed to dry at 130 °C for two hours and the resulting acrylic polymers were used in place of the PSA.

(3) Adhesive strength

Each PSA sheet with a PET substrate obtained in respective Examples and Comparative Examples was cut to 20 mm by 100 mm, and this was pressure-bonded to an ABS plate with a 2 kg rubber roller moved back and forth once. Subsequently, the resultant was left at 23 °C for 30 minutes. Under an atmosphere at 23 °C, peel test was carried out at a peel angle of 180° and a peel rate of 300 mm/min to measure the peel strength.

(4) Anchoring strength

Each PSA sheet with a PET substrate obtained in respective Examples and Comparative Examples was cut to 20 mm by 100 mm, and the PET substrate side thereof was fixed with double-faced tape (trade name "NO. 5000" available from Nitto Denko Corporation).
On the other hand, the release sheet was removed from each PSA sheet obtained in respective Examples and Comparative Examples, and the exposed adhesive face was adhered to the adhesive face of PSA tape (trade name "NO. 315" available from Nitto Denko Corporation) (19 mm wide) and pressure-bonded with a 2 kg roller moved back and forth once. Subsequently, it was left at 23 °C for 30 minutes. Under an atmosphere at 23 °C, the PET substrate and the PSA in the PSA sheet were peeled away at a peel angle of 180° and a peel rate of 300 mm/min to measure the peel strength.

(5) Heat resistance

Each PSA sheet with a PET substrate obtained in respective Examples and Comparative Examples was cut to 20 mm by 100 mm, and this was pressure-bonded to a SUS304BA plate. The resultant was placed in a hot air oven at 150 °C for one hour. After removed from the oven, it was left until it reached room temperature. The PSA sheet was peeled away from the SUS304BA plate and the state of any PSA residue left on the SUS304BA plate was visually inspected based on the following ratings:

○: no PSA residue left
△: PSA residue left partially
x: PSA residue left entirely

(6) Glass transition temperature by a DSC method

With approximately 2.5 mg of PSA obtained by peeling the separator away from each release sheet-containing PSA sheet obtained in respective Examples and Comparative Examples, measurements were taken under the following conditions:

System: Q-2000 available from TA Instruments
Average rate of temperature increase: 5 °C/min
Temperature amplitude: ±0.53 °C
Modulation period: 40 sec

The middle point glass transition temperature ($T_{mg}$) determined based on "9.3 Determination of Glass Transition Temperatures" in JIS K7121(1987) was recorded as the glass transition temperature (Tg).

[Table 2]

| | Acrylic polymer (A) | | Acrylic polymer (B) | | T/C (parts by wt.) | ADH (parts by wt.) | Physical properties of PSA | | | | | |
|---|---|---|---|---|---|---|---|---|---|---|---|---|
| | species | Amount added (parts by wt.) | species | Amount added (parts by wt.) | | | Gel fraction (%) | Adhesive strength (N/20mm) | Anchoring strength (N/19mm) | Heat resistance | Tg(°C) | (DSC) |
| Ex 1 | A1 | 90 | B1 | 10 | 0031 | - | 40 | 13.5 | 7.2 | ○ | -43 | 108 |
| Ex 2 | A1 | 90 | B2 | 10 | 003 | - | 41 | 16.8 | 7.2 | ○ | -43 | 108 |
| Ex 3 | A1 | 90 | B3 | 10 | 0.025 | - | 38 | 16.4 | 5.7 | ○ | -43 | 108 |
| Ex 4 | A1 | 95 | B4 | 5 | 0028 | - | 45 | 14.7 | 8.4 | ○ | -43 | 108 |
| Ex 5 | A1 | 90 | B4 | 10 | 0027 | - | 46 | 15.8 | 10.6 | ○ | -43 | 108 |
| Ex 6 | A1 | 85 | B4 | 15 | 0027 | - | 41 | 17.1 | 13.2 | ○ | -43 | 108 |
| Ex. 7 | A1 | 80 | B4 | 20 | 0026 | - | 49 | 12.8 | 4.7 | ○ | -43 | 108 |
| Ex 8 | A1 | 70 | B4 | 30 | 0.021 | - | 47 | 12.5 | 3.6 | ○ | -43 | 108 |
| Ex 9 | A1 | 90 | B5 | 10 | 0027 | - | 44 | 14.7 | 10.4 | ○ | -43 | 174 |
| Ex 10 | A1 | 90 | B6 | 10 | 0027 | - | 48 | 16.3 | 4.5 | ○ | -43 | 124 |
| Ex 11 | A1 | 90 | B7 | 10 | 0027 | - | 45 | 12.9 | 6.9 | ○ | -43 | 118 |
| Ex 12 | A1 | 90 | B8 | 10 | 0026 | - | 48 | 14 5 | 7.0 | ○ | -43 | 52 |
| Ex 13 | A3 | 90 | B4 | 10 | 0.005 | - | 50 | 12 | 10.0 | ○ | -43 | 108 |
| Ex 14 | A2 | 95 | B4 | 5 | 0028 | - | 79 | 9.4 | 3.0 | ○ | -43 | 108 |
| Ex 15 | A2 | 90 | B4 | 10 | 0028 | - | 78 | 10.6 | 6.6 | ○ | -43 | 108 |
| Ex 16 | C2 | 95 | B4 | 5 | 0028 | - | 39 | 10.0 | 5.0 | ○ | -31 | 108 |
| Ex 17 | C1 | 90 | B4 | 10 | 0027 | - | 45 | 11.6 | 8.9 | ○ | -43 | 108 |
| Comp Ex. 1 | A1 | 100 | - | - | 0031 | - | 44 | 11.9 | 1.7 | ○ | -43 | - |
| Comp. Ex. 2 | A3 | 90 | B4 | 10 | 0 | - | 35 | 11.0 | 9.7 | × | -43 | 108 |
| Comp. Ex. 3 | A4 | 93 | B9 | 7 | - | 02 | 77 | 7.5 | 8.8 | × | -45 | 100 |

EP 2 730 630 A1

| | Acrylic polymer (A) | | Acrylic polymer (B) | | T/C (parts by wt.) | ADH (parts by wt.) | Physical properties of PSA | | | | | |
| --- | --- | --- | --- | --- | --- | --- | --- | --- | --- | --- | --- | --- |
| | species | Amount added (parts by wt.) | species | Amount added (parts by wt.) | | | Gel fraction (%) | Adhesive strength (N/20mm) | Anchoring strength (N/19mm) | Heat resistance | Tg(°C) | (DSC) |
| Comp. Ex. 4 | C1 | 100 | - | - | 0.03 | - | 46 | 9.4 | 1.0 | ○ | -43 | - |
| Comp. Ex. 5 | C2 | 100 | - | - | 0.03 | - | 39 | 8.5 | 0.95 | ○ | -31 | - |

In Tables, "T/C" means a crosslinking agent (trade name "TETRAD C" available from Mitsubishi Gas Chemical Company, Inc.) while "ADH" means a crosslinking agent (adipic dihydrazide).

It is noted that the crosslinking agent of Comparative Example 3 reacts with only the amide group in the acrylic polymer A4, but not with the carboxyl group. Accordingly, in the PSA sheet of Comparative Example 3, it is considered that interparticle crosslinks were formed in the acrylic polymer A4 having an amide group while the acrylic polymer B9 having no amide group was present without interparticle crosslinks. Thus, in the PSA sheet of Comparative Example 3, it is considered that the cohesive strength turned out insufficient, and PSA residue was left in the heat resistance test.

The present invention is not limited to the respective embodiments described above and can be modified in a variety of ways within the ranges described in the claims. The technical scope of the present invention encompasses embodiments obtained by suitably combining technical means disclosed respectively in the different embodiments.

[Industrial Applicability]

The water-dispersed PSA composition according to the present invention can ensure adhesion to plastic film without a need for primer coating treatment while not impairing the properties such as adhesive strength, heat resistance, etc., making itself preferable for use in various PSA sheets.

[Reference Signs List]

1: substrate
2: PSA layer
3: release sheet

**Claims**

1. A water-dispersed pressure-sensitive adhesive composition comprising:

    an acrylic polymer (A) obtainable by polymerizing a monomer composition (A) comprising an alkyl (meth)acrylate as a primary component and a reactive functional group-containing monomer;
    an acrylic polymer (B) obtainable by polymerizing a monomer composition (B) comprising an alkyl (meth)acrylate as a primary component and a reactive functional group-containing monomer, the acrylic polymer (B) having a higher glass transition temperature than the acrylic polymer (A); and
    a crosslinking agent (C) that is reactive with the reactive functional group, wherein
    glass transition temperature peaks are detected at -25 °C or below and in a range of +30 °C to +190 °C, respectively, in a DSC (differential scanning calorimeter) measurement made on a pressure-sensitive adhesive obtainable by drying the water-dispersed pressure-sensitive adhesive composition.

2. The water-dispersed pressure-sensitive adhesive composition according to Claim 1, comprising the acrylic polymer (A) and the acrylic polymer (B) at a solid weight ratio (acrylic polymer (A)/acrylic polymer (B)) of 99/1 to 60/40.

3. The water-dispersed pressure-sensitive adhesive composition according to Claim 1 or 2, comprising the crosslinking agent (C) in a range of 0.0007 to 10 parts by weight relative to 100 parts by weight of the acrylic polymer (A) and the acrylic polymer (B) combined.

4. The water-dispersed pressure-sensitive adhesive composition according to any one of Claims 1 to 3, wherein the acrylic polymer (A) comprises 70 % by weight or less of an ethyl acetate-insoluble portion.

5. The water-dispersed pressure-sensitive adhesive composition according to any one of Claims 1 to 4, wherein the acrylic polymer (B) has an SP value of 18 $(MPa)^{1/2}$ to 24 $(MPa)^{1/2}$.

6. The water-dispersed pressure-sensitive adhesive composition according to any one of Claims 1 to 5, wherein the acrylic polymer (B) has a weight average molecular weight of 2,000 to 5,000,000.

7. The water-dispersed pressure-sensitive adhesive composition according to any one of Claims 1 to 6, wherein the pressure-sensitive adhesive obtainable by drying the water-dispersed pressure-sensitive adhesive composition comprises 30 to 85 % by weight of an ethyl acetate-insoluble portion.

8.  A pressure-sensitive adhesive formed with the water-dispersed pressure-sensitive adhesive composition according to any one of Claims 1 to 7.

9.  A pressure-sensitive adhesive sheet comprising a pressure-sensitive adhesive layer formed from the pressure-sensitive adhesive according to Claim 8.

[Fig. 1]

(a)

2
1

(b)

3
2
1

(c)

3
2
1
2
3

[Fig. 2]

## INTERNATIONAL SEARCH REPORT

| International application No. |
| --- |
| PCT/JP2012/063780 |

A.  CLASSIFICATION OF SUBJECT MATTER
*C09J133/06*(2006.01)i, *C09J7/00*(2006.01)i, *C09J11/06*(2006.01)i

According to International Patent Classification (IPC) or to both national classification and IPC

B.  FIELDS SEARCHED

Minimum documentation searched (classification system followed by classification symbols)
C09J133/06, C09J7/00, C09J11/06

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 5-247420 A  (Mitsui Toatsu Chemicals, Inc.), 24 September 1993 (24.09.1993), comparative example 3 (Family: none) | 1,3,5-9 |
| X | JP 2000-281999 A  (Nippon Carbide Industries Co., Inc.), 10 October 2000 (10.10.2000), claims; paragraphs [0049], [0061]; examples 9 to 10 (Family: none) | 1-3,5-9 |
| Y | JP 2003-105298 A  (Nitto Denko Corp.), 09 April 2003 (09.04.2003), claims (Family: none) | 1-9 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 August, 2012 (29.08.12) | 11 September, 2012 (11.09.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2012/063780 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2007-518862 A  (LG Chem, Ltd.),<br>12 July 2007 (12.07.2007),<br>claims; paragraph [0033]<br>& US 2005/0239965 A1    & EP 1737921 A1<br>& WO 2005/113699 A1    & KR 10-2005-0102997 A<br>& CN 1918254 A | 1-9 |
| Y | JP 11-172218 A  (Toyo Ink Manufacturing Co.,<br>Ltd.),<br>29 June 1999 (29.06.1999),<br>claims<br>(Family: none) | 1-9 |
| A | JP 2002-241709 A  (Soken Chemical & Engineering<br>Co., Ltd.),<br>28 August 2002 (28.08.2002),<br>claims<br>(Family: none) | 1-9 |
| A | JP 2006-232882 A  (Nitto Denko Corp.),<br>07 September 2006 (07.09.2006),<br>claims<br>& US 2006/0188711 A1    & EP 1693430 A2<br>& KR 10-2006-0093663 A   & CN 1824722 A | 1-9 |
| A | JP 2001-200227 A  (Mitsubishi Chemical Corp.),<br>24 July 2001 (24.07.2001),<br>claims<br>(Family: none) | 1-9 |

Form PCT/ISA/210 (continuation of second sheet) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011150508 A
- JP 2012027558 A
- JP 2006282733 A

- JP 2007051271 A
- JP 2009001673 A
- JP 2007063536 A

**Non-patent literature cited in the description**

- *Journal of the Adhesive Society of Japan,* 1986, vol. 22 (10), 566

- Polymer Handbook. John Wiley & Sons, Inc, 1999